# EUROPÄISCHE PATENTSCHRIFT

(11) **EP 0 499 838 B1**
(45) Veröffentlichungstag und Bekanntmachung des Hinweises auf die Patenterteilung: **14.06.1995**
(21) Anmeldenummer: 92101368.6
(22) Anmeldetag: 28.01.1992
(51) Int. Cl.: H05K 5/00

(54) **Elektrogerät**
Electric apparatus
Appareil électrique

(30) Priorität: 18.02.1991 DE 4104885
(43) Veröffentlichungstag der Anmeldung: 26.08.1992
(73) Patentinhaber: Braun Aktiengesellschaft, Frankfurt am Main (DE)
(72) Erfinder: Franke, Wolfgang, W-6070 Langen (DE)

(56) Entgegenhaltungen:
- EP-A- 0 344 988
- DE-A- 3 304 096
- DE-U- 8 012 410
- US-A- 4 451 693

## Beschreibung

Die Erfindung bezieht sich auf ein Elektrogerät mit mindestens einem Gehäuse zur Aufnahme wenigstens eines Funktionsteils und mindestens einer mit dem Funktionsteil zusammenwirkenden und aufladbaren Speicherzelle, einer Speicherzellenladeschaltung sowie mit einem am Gerät vorgesehenen Gerätestecker, der aus einem Steckerbuchsengehäuse mit einer Steckerstifte aufweisenden Einstecköffnung besteht, die zur Aufnahme einer Gerätesteckdose eines Netzkabels für die Stromversorgung der Speicherzelle dient.

Derartige, mittels aufladbarer Speicherzellen betriebene Elektrogeräte, wie zum Beispiel Rasierapparate, Zahnbürsten, Schraubendreher, Bohrmaschinen, Taschenlampen usw. befinden sich in großer Zahl im praktischen Einsatz, siehe z.B. DE-U-8 012 410. Zwecks Aufladung der Speicherzellen sind diese Elektrogeräte mit einem aus Sicherheitsgründen genormten Gerätestecker ausgestattet, in dessen Einstecköffnung ebenfalls eine genormte Gerätesteckdose eines Netzkabels zur Übertragung einer Netzspannung formschlüssig einsteckbar ist. Der Gebrauchsnutzen derartiger Elektrogeräte ist sehr hoch, da die Speicherzellen wiederholt und sehr oft aufgeladen werden können. Nach jedem Aufladevorgang steht ein voll funktionsfähiges Elektrogerät zur Verfügung, das dann ohne Netzkabelanschluß eingesetzt werden kann. Vielfach ist die Speicherzellenladeschaltung derartiger Elektrogeräte mit weiteren elektrischen Bauelementen versehen, die, unabhängig vom Ladezustand der Speicherzellen, einen Betrieb des Elektrogerätes mittels direkter Netzspannungsversorgung gewährleisten.

Aufladbare Speicherzellen haben bekanntlich eine begrenzte Lebensdauer. Demzufolge sollten mit aufladbaren Speicherzellen ausgestattete Elektrogeräte konstruktiv derart ausgestaltet werden, daß eine sichere Entsorgung verbrauchter Speicherzellen durchführbar ist.

Aufgabe der Erfindung ist es, ein Elektrogerät der eingangs angegebenen Art in der Weise auszubilden, daß die aufladbaren Speicherzellen auf einfache Weise aus dem Elektrogerät entfernt werden können, ohne daß dabei die Bedienungsperson mit der gefährlichen Netzspannung in Berührung kommen kann.

Gelöst wird die Aufgabe erfindungsgemäß dadurch, daß das Gehäuse bzw. Steckerbuchsengehäuse derart ausgebildet ist, daß ein hinzufügbares, mindestens ein Kontaktelement aufweisendes Tragteil in angebautem Zustand am Gerät einen Stromfluß zwischen der Speicherzelle und den Steckerstiften herstellt und bei Abnahme vom Gerät den Stromfluß zwischen diesen Teilen unterbricht. Hierdurch ist auf einfache Weise eine Entsorgung des Gerätes möglich, da hierzu lediglich das Tragteil vom Gehäuse entfernt zu werden braucht, um an den Innenraum zur Aufnahme der Speicherzellen zu gelangen. Danach lassen sich mit wenigen Handgriffen die Speicherzellen entfernen. Eine erneute Inbetriebnahme des Gerätes ist nur dann möglich, wenn neue Speicherzellen eingefügt werden und das die Kontakte aufnehmende Tragteil wieder an das Gerät angesetzt worden ist. Durch die Abnahme des die Kontakte aufnehmenden Tragteils wird eine unbefugte Inbetriebnahme ausgeschlossen, auch dann, wenn die Gerätesteckdose in den Gerätestecker eingeführt worden ist.

Ferner ist es vorteilhaft, daß das Tragteil als ein das Gehäuse vervollständigendes Gehäuseteil ausgebildet ist, das zwei Kontaktelemente trägt. Nach einer Ausführungsform der Erfindung ist vorgesehen, daß das Kontaktelement aus einem in etwa U-förmigen, federelastischen Bügel mit zwei gegenüberliegenden Schenkeln besteht, wobei in angebautem Zustand des Gehäuseteils am Gehäuse der eine Schenkel gegen eine Leiterfahne und der andere Schenkel gegen einen Kontaktstift mittel- oder unmittelbar zur Anlage bringbar ist. Hierdurch kann zwischen den mit Leiterfahnen verbundenen Speicherzellen und den Kontaktstiften eine Stromflußverbindung hergestellt werden.

Eine zusätzliche Möglichkeit ist gemäß einer Weiterbildung der erfindungsgemäßen Vorrichtung, daß jedes Kontaktelement in einer im Gehäuseteil vorgesehenen Öffnung aufgenommen ist und die Öffnung gegenüberliegende Seitenwände aufweist, gegen die die Schenkel des Kontaktelementes anliegen. Da in vorteilhafter Weise die Kontaktelemente an dem abnehmbaren Gehäuseteil angeordnet sind, das auch den Innenraum zur Aufnahme der Speicherzellen abdeckt, erfüllt dieser Teil auf einfache, kostensparende Weise zwei Funktionen. Einmal stellt er bei der Entsorgung des Gerätes sicher, daß keine Stromversorgung des Gerätes möglich ist und zum anderen, daß das Gehäuseteil das Gehäuse bzw. den Innenraum vollständig verschließt, wenn dieses nach der Entsorgung wieder montiert worden ist.

In weiterer Ausgestaltung der Erfindung ist es vorteilhaft, daß die Steckerstifte in einem die Steckerstifte umgebenden Steckerbuchsengehäuse feststehend angeordnet und über je eine mit den Kontaktelementen in Berührung bringbare Leiterfahne mit der bzw. den Speicherzellen verbunden sind.

Eine bevorzugte Ausführungsform der Erfindung zeichnet sich dadurch aus, daß das Gerät aus einem Gehäusechassis, mindestens einem auf das Gehäusechassis aufbringbaren Gehäuse und einem das Gehäuse vervollständigenden Gehäuseteil gebildet ist, wobei das Gehäuse und/oder das Gehäusechassis zur Aufnahme des Steckerbuchsengehäuses dient.

Von besonderer Bedeutung ist für die vorliegende Erfindung, daß das abnehmbare Gehäuseteil auf seiner Bodenwand Sacklochbohrungen aufweisende Halterungen trägt, die zur Aufnahme der Kontaktelemente dienen, wobei mit Abstand zu den Kontaktelementen in der Bodenwand eine Öffnung vorgesehen ist, die beim Aufsetzen des Gehäuseteils auf das Gehäuse über das Steckerbuchsengehäuse geschoben wird.

Außerdem ist es vorteilhaft, daß das Steckerbuchsengehäuse auf der unteren Wand des Chassis angeordnet ist, wobei sich an das Steckerbuchsengehäuse eine Steckdose zur Aufnahme der Kontaktelemente anschließt, die beim Anbau des Gehäuseteils am Gehäuse in die Steckdose eingeführt wird. Hierdurch erhält man eine sehr kompakte Bauweise, bei der alle wesentlichen Teile auf kleinstem Raum untergebracht sind.

Weitere Merkmale der Erfindung sind in den Unteransprüchen, in der Beschreibung und in den Figuren beschrieben bzw. dargestellt, wobei bemerkt wird, daß alle Einzelmerkmale und alle Kombinationen von Einzelmerkmalen erfindungswesentlich sind.

Die Lösung nach der Erfindung läßt sich grundsätzlich bei allen Arten von mit aufladbaren Speicherzellen betriebenen Elektrogeräten, die über eine Gerätesteckdose mittels eines einsteckbaren Netzkabels aufladbar und betreibbar sind, wie beispielsweise Rasierapparate, Zahnbürsten, Schraubendreher, Bohrmaschinen, Taschenlampen und dergleichen verwenden. Ein bevorzugter Anwendungsfall stellt einen mit aufladbaren Speicherzellen ausgestalteten Rasierapparat dar.

In den Figuren ist die Erfindung an einer Ausführungsform beispielsweise dargestellt, ohne auf diese Ausführungsform beschränkt zu sein. Es zeigt:
- Figur 1: einen Rasierapparat mit einem hülsenartigen Gehäuseteil in perspektivischer Darstellung;
- Figur 2: eine Explosionsdarstellung eines geöffneten Rasierapparats mit abgenommenem Gehäuseteil und eines Steckerbuchsengehäuses, das Teil eines Gerätesteckers ist;
- Figur 3: ein Gehäusechassis des Elektrogerätes;
- Figur 4: ein abnehmbares Gehäuseteil mit den erfindungsgemäßen Kontaktelementen, das auf das Gehäusechassis aufschiebbar ist;
- Figur 5: einen Teillängsschnitt entlang der Linie A-A gemäß Figur 4.

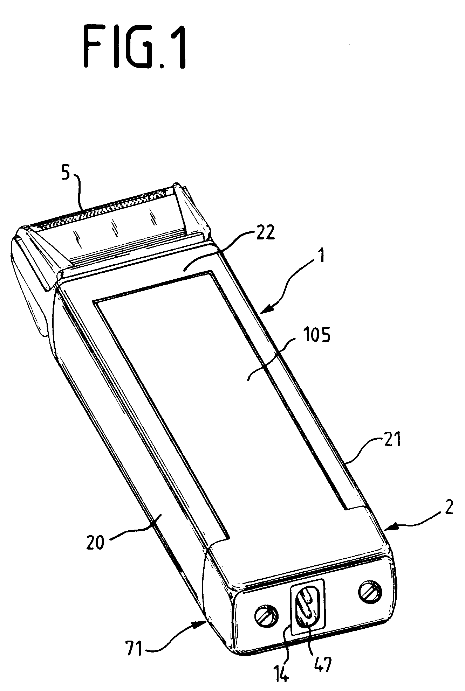

In der Zeichnung ist in Figur 1 ein Elektrogerät, insbesondere ein Trockenrasierapparat mit einem Gehäuse 1 und einem abnehmbaren Tragteil 71 in Form eines topfartigen Gehäuseteils 2, einem auf der Frontseite des Gehäuses 1 verschiebbar angeordneten Ein- und Ausschalter für den im Gehäuse 1 befindlichen elektrischen Antrieb und einem auf dem oberen Ende des Gehäuses 1 vorgesehenen Scherkopf 5 dargestellt.

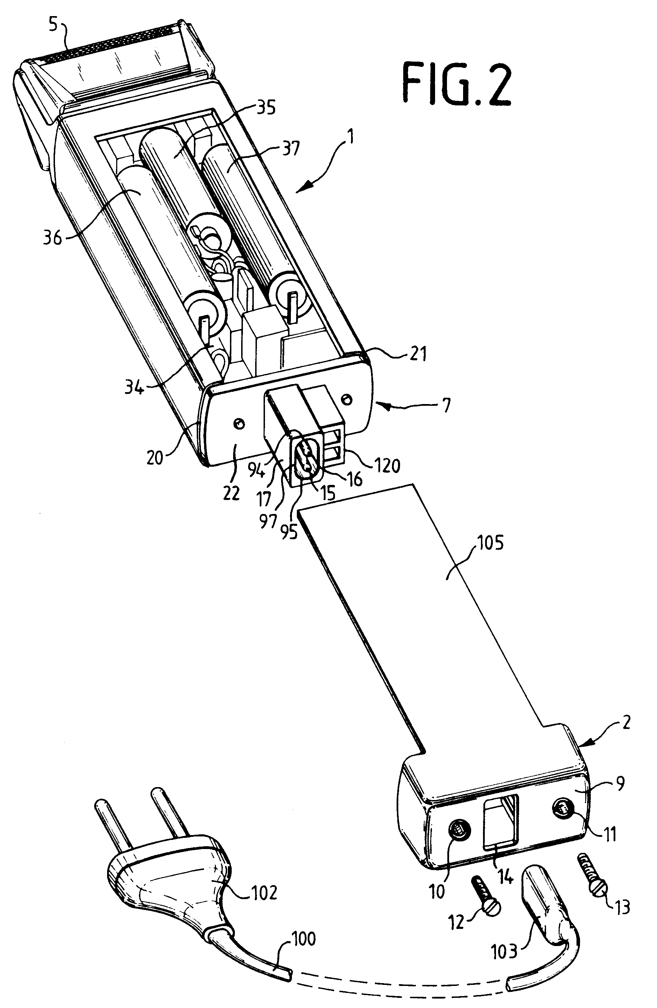

Das Gerät besteht (Figur 2) aus einem Gehäuse 1, einem Gehäusechassis 7 und einem das Gehäuse umgebenden, abnehmbaren Gehäuseteil 2, das der Außenkontur des Gehäuses 1 angepaßt ist. Das Gehäuseteil 2 weist eine Bodenwand 9 auf, in der zwei runde Ausnehmungen 10,11 mit darin angeordneten Schrauben 12,13 sowie eine rechteckförmige Öffnung 14 vorgesehen sind. In der Öffnung 14 sind zwei Steckerstifte 15,16 angeordnet, die von einem Steckerbuchsengehäuse 17 umgeben sind und aus der Öffnung 14 herausragen.

Ein zum Aufladen der auf dem Gehäusechassis 7 angeordneten Speicherzellen 36,37 oder auch zum direkten Netzbetrieb des Elektrogerätes bzw. des Rasierapparates erforderliches Netzkabel ist mit 100 bezeichnet. Das Netzkabel 100 ist einerseits mit einem üblichen Gerätestecker 102 und andererseits mit einer für den Anschluß an das Elektrogerät bestimmten Gerätesteckdose 103 versehen. Die Gerätesteckdose 103 weist eine der Einstecköffnung 47 des Steckerbuchsengehäuses 17 angepaßte äußere Form auf, die bestimmt ist durch zwei in horizontaler Richtung verlaufende, ebenflächig ausgebildete schmale Seitenwände 94,95 (Figur 1,2) und zwei diese in vertikaler Richtung miteinander verbindende breite Seitenwände 97.

Das Gehäuse 1 (Figur 1,2) besteht im wesentlichen aus zwei in Längsrichtung verlaufenden Seitenwänden 20,21 und einer die gegenüberliegenden Enden miteinander verbindenden Wand 22 sowie einer in der Zeichnung nicht dargestellten Frontseite.

Die Seitenwände 20,21 und die Wand 22 bilden einen Ausschnitt in den ein T-förmiges Wandteil 105 einfügbar ist, wenn hierzu ein Gehäuseteil 2 mit seinem oberen, freitragenden Wandteil 105 mit dem Gehäuse 1 zu einem Ganzen zusammengesetzt wird. Das Gehäuseteil 2 wird mittels in die Ausnehmungen 10,11 einsetzbarer Schrauben 12,13 am Gehäusechassis 7 befestigt.

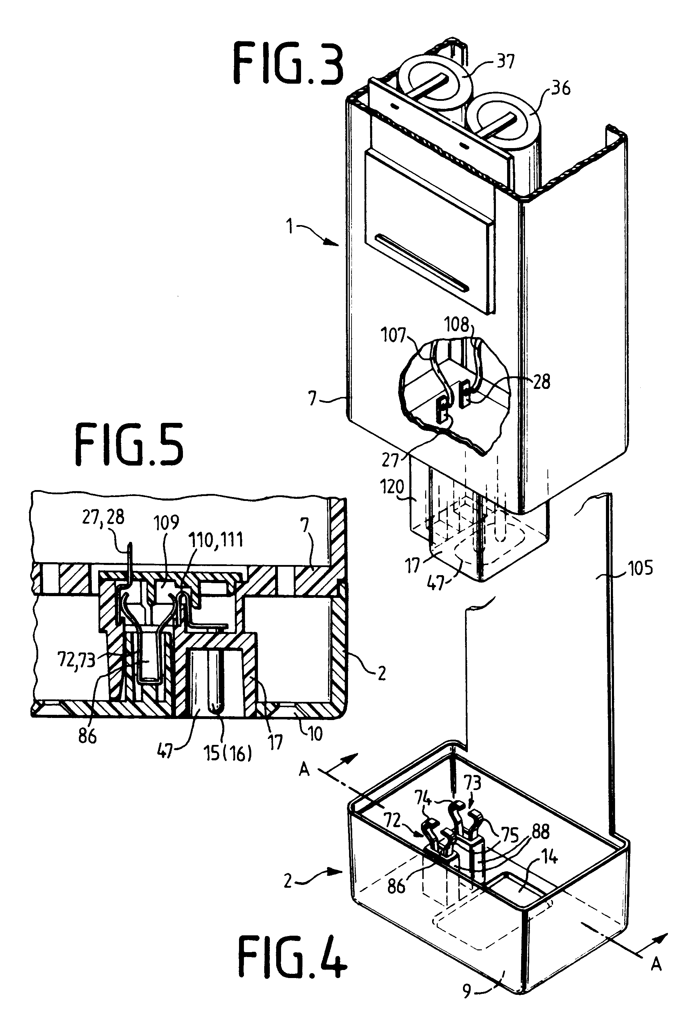

Wie aus Figur 2 und 3 hervorgeht sind auf einer im Gehäuse 1 vorgesehenen Leiterplatte 34 der elektrische Antriebsmotor 35, die aufladbaren Speicherzellen 36,37 sowie weitere elektrische Bauelemente einer elektrischen Schaltung, insbesondere einer Speicherzellenladeschaltung, vorgesehen.

Wie aus den Figuren 3,5 hervorgeht, ist die elektrische Schaltung der beiden Speicherzellen 36,37 über elektrische Leitungen 107,108 mit im Gehäusechassis 7 angeordneten Leiterfahnen 27,28 verbunden, die sich in je eine Sacklochbohrung 109 erstrecken (Figur 5), die in einer Steckdose 120 am Gehäusechassis 7 vorgesehen sind.

Wie aus Figur 4 und 5 hervorgeht, liegen die beiden Halterungen 88 in angebautem Zustand des Gehäuseteils 2 mit ihren entsprechenden Sacklochbohrungen 86 gegenüber den zwei Sacklochbohrungen 109, die in dem Gehäusechassis 7 vorgesehen sind und die zur Aufnahme der Leiterfahnen 27,28 dienen.

Auf der unteren Wand 22 des Gehäusechassis 7 ist das Steckerbuchsengehäuse 17 vorgesehen, in dessen Einstecköffnung 47 zwei Steckerstifte 15,16 angeordnet sind, die mit ihren innen liegenden Enden an die Leiterfahnen 110 und 111 angeschlossen sind.

Die beiden jeweils paarweise angeordneten Leiterfahnen 27,28 und 110 und 111 liegen mit Bezug auf die Zeichnung jeweils auf der gleichen horizontal verlaufenden Ebene, so daß beim Anbau des Gehäuseteils 2 an das Gehäuse 1 bzw. an daß Gehäusechassis die Kontaktelemente 72,73 in die entsprechenden Sacklochbohrungen 109 des Gehäusechassis derart weit eingeführt werden, daß die beiden gegenüberliegenden Leiterfahnen 110 und 111 sowie 27 und 28 miteinander verbunden werden.

Damit zwischen den sich gegenüberliegenden Leiterfahnen 27,28 und 110, 111 eine Stromverbindung hergestellt werden kann, bestehen die Kontaktelemente 72,73 aus einem in etwa U-förmigen, federelastischen Bügel mit zwei gegenüberliegenden, in etwa parallel verlaufenden Schenkeln 74,75. Das obere Ende eines jeden Schenkels 74,75 ist abgewinkelt bzw. abgerundet und liegt in angebautem Zustand des Gehäuseteils 2 an den gegenüberliegenden Leiterfahnen 27,28,110,111 an. Durch die federelastische Ausbildung der Kontaktelemente 72,73 wird für eine einwandfreie Stromverbindung zwischen den Leiterfahnen gesorgt.

Um ein selbsttätiges Lösen des angebauten Gehäuseteils 2 vom Gehäuse 1 zu verhindern, ist das Gehäuseteil 2 beispielsweise mittels Schrauben 12,13 am Gehäusechassis 7 gesichert.

Soll das Elektrogerät entsorgt werden, so brauchen lediglich die beiden Schrauben 12,13 entfernt zu werden, um dann das Gehäuseteil 2 von dem feststehenden Gehäuse 1 bzw. von dem Gehäusechassis 7 abziehen zu können. Danach ist der Innenraum des Gehäuses 1 so weit zugänglich (Figur 2), daß die Speicherzellen 36,37 und/oder die Leiterplatte ohne weiteres aus dem Gehäuse entnommen werden können. Obwohl das Steckerbuchsengehäuse 17 mit den beiden Kontaktstiften 15,16 weiterhin am Gehäuse 1 befestigt ist, kann auch nach Einführen der Gerätesteckdose 103 keine Stromversorgung zwischen den Speicherzellen 36,37 und einer Stromquelle hergestellt werden.

## Patentansprüche

1. Elektrogerät mit mindestens einem Gehäuse (1) zur Aufnahme wenigstens eines Funktionsteils (35) und mindestens einer mit dem Funktionsteil zusammenwirkenden und aufladbaren Speicherzelle (36), einer Speicherzellenladeschaltung sowie mit einem am Gerät vorgesehenen Gerätestecker, der aus einem Steckerbuchsengehäuse (17) mit einer Steckerstifte (15,16) aufweisenden Einstecköffnung (47) besteht, die zur Aufnahme einer Gerätesteckdose (103) eines Netzkabels (100) für die Stromversorgung der Speicherzelle (36) dient, dadurch gekennzeichnet, daß das Gehäuse bzw. Steckerbuchsengehäuse (17) derart ausgebildet ist, daß ein hinzufügbares, mindestens ein Kontaktelement (72, 73) aufweisendes Tragteil (71) in angebautem Zustand am Gerät einen Stromfluß zwischen der Speicherzelle (36) und den Steckerstiften (15,16) herstellt und bei Abnahme vom Gerät den Stromfluß zwischen diesen Teilen unterbricht.

2. Elektrogerät nach Anspruch 1, dadurch gekennzeichnet, daß das Tragteil (71) als ein das Gehäuse (1) vervollständigendes Gehäuseteil (2) ausgebildet ist, das zwei Kontaktelemente (72,73) trägt.

3. Elektrogerät nach Anspruch 1 oder 2, dadurch gekennzeichnet, daß das Kontaktelement (72,73) aus einem in etwa U-förmigen, federelastischen Bügel mit zwei gegenüberliegenden Schenkeln (74,75) besteht, wobei in angebautem Zustand des Gehäuseteils (2) am Gehäuse (1) der eine Schenkel (74) gegen eine Leiterfahne (27,28) und der andere Schenkel (75) gegen einen Kontaktstift (15,16) mittel- oder unmittelbar zur Anlage bringbar ist.

4. Elektrogerät nach einem oder mehreren der vorhergehenden Ansprüche, dadurch gekennzeichnet, daß jedes Kontaktelement (72,73) in einer im Gehäuseteil (2) vorgesehenen Öffnung (86) aufgenommen ist.

5. Elektrogerät nach einem oder mehreren der vorhergehenden Ansprüche, dadurch gekennzeichnet, daß die Öffnung (86) gegenüberliegende Seitenwände aufweist, gegen die die Schenkel des Kontaktelementes (72,73) anliegen.

6. Elektrogerät nach einem oder mehreren der vorhergehenden Ansprüche, dadurch gekennzeichnet, daß die Steckerstifte (15,16) in einem die Steckerstifte umgebenden Steckerbuchsengehäuse (17) feststehend angeordnet und über je eine mit den Kontaktelementen (72,73) in Berührung bringbaren Leiterfahne (110,111,27,28) mit der Speicherzellenladeschaltung bzw. den Speicherzellen (36,37) verbunden sind.

7. Elektrogerät nach einem oder mehreren der vorhergehenden Ansprüche, dadurch gekennzeichnet, daß das Gerät aus einem Gehäusechassis (7), mindestens einem auf das Gehäusechassis (7) aufbringbaren Gehäuse (1) und einem das Gehäuse (1) vervollständigenden Gehäuseteil (2) gebildet ist, wobei das Gehäuse (1) und/oder das Gehäusechassis (7) zur Aufnahme des Steckerbuchsengehäuses (17) dient.

8. Elektrogerät nach einem oder mehreren der vorhergehenden Ansprüche, dadurch gekennzeichnet, daß das abnehmbare Gehäuseteil (2) auf seiner Bodenwand (9) Sacklochbohrungen (86) aufweisende Halterungen (88) trägt, die zur Aufnahme der Kontaktelemente (72,73) dienen, wobei mit Abstand zu den Kontaktelementen (72,73) in der Bodenwand (9) eine Öffnung (14) vorgesehen ist, die beim Aufsetzen des Gehäuseteils (2) auf das Gehäuse (1) über das Steckerbuchsengehäuse (17) geschoben wird.

9. Elektrogerät nach einem oder mehreren der vorhergehenden Ansprüche, dadurch gekennzeichnet, daß das Steckerbuchsengehäuse (17) auf der unteren Wand (22) des Gehäusechassis (7) angeordnet ist, wobei sich an das Steckerbuchsengehäuse (17) eine Steckdose (120) zur Aufnahme der Kontaktelemente (72,73) anschließt, die beim Anbau des Gehäuseteils (2) am Gehäuse (1) in die Steckdose (120) eingeführt werden.

## Claims

1. An electrical appliance comprising at least one housing structure (1) for accommodating at least one functional component (35) and at least one rechargeable storage cell (36) cooperating with said functional component, a storage cell charging circuitry, as well as an appliance plug provided on the appliance and comprising a connector base (17) having a receiving aperture (47) in which contact pins (15, 16) are provided for engagement with a connector (103) of a power cord (100) supplying electrical power to said storage cell (36), characterized in that said housing structure or said connector base (17) is configured such that a mountable supporting structure (71) including at least one contact element (72, 73) establishes electrical continuity between said storage cell (36) and said contact pins (15, 16) when mounted on the appliance, and breaking it when detached from the appliance.

2. The electrical appliance as claimed in claim 1, characterized in that said supporting structure (71) is configured as a housing portion (2) completing said housing structure (1) and carrying two contact elements (72, 73).

3. The electrical appliance as claimed in claim 1 or claim 2, characterized in that said contact element (72, 73) is comprised of an approximately U-shaped resilient member having two opposite arms (74, 75), wherein, with said housing portion (2) mounted on said housing structure (1), said one arm (74) is adapted to abut against a terminal lug (27, 28) and said other arm (75) is adapted to abut against a contact pin (15, 16) by either direct or indirect means.

4. The electrical appliance as claimed in one or several of the preceding claims, characterized in that each of said contact elements (72, 73) is received in an opening (86) provided in said housing portion (2).

5. The electrical appliance as claimed in one or several of the preceding claims, characterized in that said opening (86) has opposite side walls against which said arms of said contact element (72, 73) abut.

6. The electrical appliance as claimed in one or several of the preceding claims, characterized in that said contact pins (15, 16) are fixedly disposed in a connector base (17) surrounding said contact pins and are connected to the storage cell charging circuitry or the storage cells (36, 37) by means of a respective one of said terminal lugs (110, 111, 27, 28) adapted to be brought into contact with said contact elements (72, 73).

7. The electrical appliance as claimed in one or several of the preceding claims, characterized in that the appliance is formed of a housing frame (7), at least one housing structure (1) adapted to be mounted on said housing frame (7), and a housing portion (2) completing said housing structure (1), wherein said housing structure (1) and/or said housing frame (7) serve the function of receiving said connector base (17).

8. The electrical appliance as claimed in one or several of the preceding claims, characterized in that a bottom wall (9) of said detachable housing portion (2) is provided with mounting structures (88) having blind-end bores (86) therein for receiving said contact elements (72, 73), wherein, spaced from said contact elements (72, 73), an opening (14) is provided in said bottom wall (9) which is slipped over said connector base (17) as said housing portion (2) is seated on said housing structure (1).

9. The electrical appliance as claimed in one or several of the preceding claims, characterized in that said connector base (17) is disposed on the bottom wall (22) of said housing frame (7), with a receptacle (120) for receiving said contact elements (72, 73) being provided adjacent to said connector base (17), said contact elements being inserted in said receptacle (120) when said housing portion (2) is mounted on said housing structure (1).

## Revendications

1. Appareil électrique comportant au moins un boîtier (1) pour le logement d'au moins une partie fonctionnelle (35) et d'au moins une cellule d'accumulation (36) qui peut être chargée et qui coopère avec la partie fonctionnelle, un circuit de charge de cellule d'accumulation ainsi qu'une fiche d'appareil qui est prévue sur l'appareil et qui est constituée d'un boîtier à douilles pour fiche comportant un orifice d'enfichage (47) qui présente des broches de fiche (15, 16) et qui sert au logement d'une prise d'appareil (103) d'un câble de réseau (100) pour l'alimentation en courant de la cellule d'accumulation (36), caractérisé en ce que le boîtier ou respectivement le boîtier à douilles pour fiche (17) est réalisé de façon qu'une partie porteuse (71) qui peut être ajoutée et qui présente au moins un élément de contact (72, 73) réalise, à l'état monté sur l'appareil, un écoulement de courant entre la cellule d'accumulation (36) et les broches de fiche (15, 16) et interrompt l'écoulement de courant entre ces parties lorsqu'on enlève l'appareil.

2. Appareil électrique suivant la revendication 1, caractérisé en ce que la partie porteuse (71) est réalisée sous la forme d'une partie de boîtier (2) qui complète le boîtier (1) et qui porte deux éléments de contact (72, 73).

3. Appareil électrique suivant la revendication 1 ou 2, caractérisé en ce que l'élément de contact (72, 73) est constitué d'un étrier approximativement en forme de U, faisant élastiquement ressort et comportant deux branches (74, 75) opposées, et en ce qu'à l'état monté de la partie de boîtier (2) sur le boîtier (1), une des branches (74) peut être mise directement ou indirectement en appui contre une patte conductrice (27, 28) et l'autre branche (75) contre une broche de contact (15, 16).

4. Appareil électrique suivant l'une ou plusieurs des revendications précédentes, caractérisé en ce que chaque élément de contact (72, 73) est logé dans une ouverture (86) prévue dans la partie de boîtier (2).

5. Appareil électrique suivant l'une ou plusieurs des revendications précédentes, caractérisé en ce que l'ouverture (86) présente des parois latérales opposées contre lesquelles sont appliquées les branches de l'élément de contact (72, 73).

6. Appareil électrique suivant l'une ou plusieurs des revendications précédentes, caractérisé en ce que les broches de fiche (15, 16) sont agencées de façon fixe dans un boîtier à douille pour fiche (17) entourant les broches de fiche et sont raccordées chaque fois par l'intermédiaire d'une patte conductrice (110, 111, 27, 28), qui peut être mise en contact avec les éléments de contact (72, 73), au circuit de charge de cellule d'accumulation ou aux cellules d'accumulation (36, 37).

7. Appareil électrique suivant l'une ou plusieurs des revendications précédentes, caractérisé en ce que l'appareil est formé par un châssis de boîtier (7) par au moins un boîtier (1) qui peut être monté sur le châssis de boîtier (7) et par une partie de boîtier (2) qui complète le boîtier (1), le boîtier (1) et/ou le châssis de boîtier (7) servant à recevoir le boîtier à douille pour fiche (17).

8. Appareil électrique suivant l'une ou plusieurs des revendications précédentes, caractérisé en ce que la partie de boîtier (2) qui peut être enlevée porte sur sa paroi de fond (9) des supports (88) qui présentent des trous borgnes (86) et qui servent au logement des éléments de contact (72, 73) et en ce qu'à distance des éléments de contact (72, 73), il est prévu dans la paroi de fond (9) une ouverture (14) qui est glissée sur le boîtier à douille pour fiche (17) lors du montage de la partie de boîtier (2) sur le boîtier (1).

9. Appareil électrique suivant l'une ou plusieurs des revendications précédentes, caractérisé en ce que le boîtier à douille pour fiche (17) est agencé sur la paroi inférieure (22) du châssis de boîtier (7) et en ce que sur le boîtier à douille pour fiche (17) se raccorde une prise (120) pour le logement des éléments de contact (72, 73) qui sont introduits dans la prise (120) lors du montage de la partie de boîtier (2) sur le boîtier (1).
